(19) Europäisches Patentamt
European Patent Office
Office européen des brevets

(11) Publication number: 0 346 148
A2

(12) # EUROPEAN PATENT APPLICATION

(21) Application number: 89305874.3

(22) Date of filing: 09.06.89

(51) Int. Cl.[4]: **C 08 L 23/06**
C 08 L 51/06, C 08 L 77/00,
C 08 L 23/12

(30) Priority: 09.06.88 JP 140576/88

(43) Date of publication of application:
13.12.89 Bulletin 89/50

(84) Designated Contracting States:
BE DE FR GB IT NL SE

(71) Applicant: TONEN SEKIYUKAGAKU KABUSHIKI KAISHA
1-1, Tsukiji 4-chome Chuo-ku
Tokyo 104 (JP)

(72) Inventor: Sakuma, Masato
17-12, Harigaya 2-chome
Urawa-shi Saitama-ken (JP)

Kitano, Kissho
1-G-1103, Ogura 1-chome Saiwa-ku
Kawasaki-shi Kanagawa-ken (JP)

Fujita, Yuji
4-3-321, nishitsurugaoka 1-chome Ooi-machi
Iruma-gun Saitama-ken (JP)

Sakaizama, Masao
20-1-131, Hirato 1-chome Totsuka-ku
Yokohama-shi Kanagawa-ken (JP)

Yagi, Yukihiko
16-24, Okamura 4-chome Isogo-ku
Yokohama-shi Kanagawa-ken (JP)

(74) Representative: Dew, Melvyn John et al
Exxon Chemical Limited Exxon Chemical Technology Centre P.O. Box 1
Abingdon Oxfordshire, OX13 6BB (GB)

(54) **Polyethylene composition.**

(57) The present invention relates to a polyethylene composition comprising (a) modified polyethylene, (b) polyamide and (c) modified polypropylene. The composition has a good adhesion force for coating in automobile parts.

EP 0 346 148 A2

## Description

### Polyethylene Composition

The present invention relates to a polyethylene composition. More particularly, it is concerned with a polyethylene composition which yields molding articles such as automotive parts having a surface that permits the good adhesion of coating film.

It is known that the polyamide-polyolefin alloy has improved low-temperature impact strength when the polyolefin component is polyethylene (PE) such as high-density polyethylene. The polyamide-polyethylene alloy, however, is very poor in coating film adhesion in the ordinary coating system and is also very poor in moldability.

Much has been discussed on the improvement of the performance (such as low-temperature impact resistance, water resistance, and salt water resistance) of polyamide resin which is expected to find extensive use as an engineering plastics on account of its superior physical properties. See, for example, Japanese Patent Laid-open Nos. 122546/1984, 122545/1984, 78256/1983, and 53550/1985.

It is an object of the present invention to provide a polyethylene composition which exhibits improved low-temperature impact strength owing to PE (such as HDPE mentioned above) contained therein without any adverse effect on coating film adhesion and molding performance (such as the elimination of flow marks that aggravate the surface appearance of moldings).

Other and further objects, features, and advantages of the invention will appear more fully from the following description.

The gist of the present invention resides in a polyethylene composition which comprises:

(a) 5-90 parts by weight of modified polyethylene having a melt index of 1-30 g/10 min at 190°C, partly or entirely modified with an unsaturated carboxylic acid or a derivative thereof;

(b) 5-90 parts by weight of polyamide; and

(c) 1-30 parts by weight of modified polypropylene partly or entirely modified with an unsaturated carboxylic acid or a derivative thereof.

The modified polyethylene used in the present invention is an acid-modified polyethylene. The base ethylene polymer for acid modification includes ethylene homopolymers and ethylene-α-olefin copolymers composed mainly of ethylene. The polyethylene includes, for example, high-density polyethylene (HDPE), medium-density polyethylene (MDPE), low-density polyethylene (LDPE), and linear low-density polyethylene (LLDPE).

The modified polyethylene is formed by modifying the above-mentioned base material partly or entirely with an unsaturated carboxylic acid or a derivative thereof. The ratio of modification should preferably be 0 .01-5 wt%.

With the ratio of modification lower than 0.01 wt%, the polyethylene composition of the present invention lacks sufficient impact resistance, coating film adhesion, and mechanical strength. On the other hand, with the ratio of modification higher than 5 wt%, the polyethylene composition is poor in moldability due to excessively high melt viscosity and also poor in impact resistance.

This modified polyethylene can be obtained by melt-mixing the above-mentioned base polyethylene with 0.05-5 parts by weight of an unsaturated carboxylic acid or a derivative thereof and 0.05-5 parts by weight of an organic peroxide.

Examples of the unsaturated carboxylic acid include maleic acid, crotonic acid, end-cis-bicyclo(2.2.1)hept-5-ene-2,3-dicarboxylic acid, fumaric acid, acrylic acid, and isocrotonic acid. Examples of the derivative of the unsaturated carboxylic acid include acid anhydrides (such as maleic anhydride), acid halides, amides, imides, and esters.

Examples of the organic peroxide include benzoyl peroxide, dichlorobenzoyl peroxide, dicumyl peroxide, and lauroyl peroxide. The organic peroxide may be replaced by a radical initiator used for the acid modification. Examples of the radical initiator include azobisisobutyronitrile and other azo compounds.

The modified polyethylene should have a melt index (MI) of 1-30 g/10 min at 190°C. With an MI (at 190°C) lower than 1 g/10 min, the polyethylene composition is poor in melt flowability and gives flow marks on the surface of the molded articles. With an MI higher than 30 g/10 min, the polyethylene composition is poor in impact resistance.

The modified polyethylene [component (a)] used in the present invention may be constituted from a single species of the above-mentioned modified polyethylene or a mixture composed of a modified polyethylene and an unmodified polyethylene, preferably high-density polyethylene.

The unmodified high-density polyethylene should also have a melt index of 1-30 g/10 min as with the modified polyethylene. In the case of the mixture, the acid content should be in the range specified above.

The polyamide [component (b)] used in the present invention includes, for example, polyamides obtained by the polycondensation of a diamine and a dicarboxylic acid, polyamides obtained by the condensation of a polyamide and an aminocarboxylic acid, and polyamides obtained by the ring opening of a lactam. They may be a copolymer or a mixture of two or more polyamides. Examples of the polyamide (nylon) [component (b)] include nylon-6, nylon-9, nylon-11, nylon-12, nylon-66, nylon-610, nylon-612, nylon-46, and aromatic nylon.

The modified polypropylene [component (c)] used in the present invention is an acid-modified propylene polymer. The base propylene polymer for acid modification includes propylene homopolymers and propylene-α-olefin copolymers. The α-olefin includes, for example, ethylene and 1-butene. The copolymers

may be either block copolymers or random copolymers.

The modified polypropylene is formed by modifying the above-mentioned base material partly or entirely with an unsaturated carboxylic acid or a derivative thereof. The ratio of modification should preferably be 0.01-2 wt%.

With the ratio of modification lower than 0.01 wt%, the polyethylene composition of the present invention does not afford molded articles which have an improved surface appearance and sufficient mechanical strength (such as tensile strength). On the other hand, with the ratio of modification higher than 2 wt%, the polyethylene composition is not improved in impact strength and has a decreased flowability.

This modified polypropylene can be obtained by melt-mixing 100 parts by weight of base polypropylene, 0.05-5 parts by weight of an unsaturated carboxylic acid or a derivative thereof, and 0.05-5 parts by weight of an organic peroxide.

Examples of the unsaturated carboxylic acid or the derivative thereof and examples of the organic peroxide include those exemplified for the above-mentioned modified polyethylene.

The modified polypropylene [component (c)] used in the present invention may be constituted from a single species of the above-mentioned modified polypropylene or a mixture composed of a modified propylene polymer and an unmodified propylene polymer. The mixture should contain the unsaturated acid in an amount specified above.

The modified polypropylene [component (c)] used in the present invention is one which is obtained by modifying a base polypropylene with an unsaturated carboxylic acid or a derivative thereof in the same manner as used for the preparation of the above-mentioned modified polyethylene.

According to the present invention, the polyethylene composition is preferably incorporated with component (d) which is a rubber or modified rubber modified with an unsaturated carboxylic acid or a derivative thereof. The modified rubber preferably has a modification ratio of 0.01-2.0 wt%. The incorporation of a modified rubber improves the impact resistance of the polyethylene composition.

The modified rubber [component (d)] may be produced by modifying a rubber base material with an unsaturated carboxylic acid or a derivative thereof in the same manner as employed for the above-mentioned modified polyethylene and polypropylene.

The modification may be accomplished by using the above-mentioned unsaturated carboxylic acid or a derivative thereof as a graft monomer. The modification may also be accomplished by the aid of the above-mentioned radical initiator (organic peroxide).

The rubber base material for modification that can be used in the present invention is a homopolymer or copolymer of α-olefins having two or more carbon atoms. Examples of the α-olefin include ethylene, propylene, 1-butene, 1-hexene, 4-methylpentene, and 1-decene.

The rubber base material for modification may also include, in addition to bipolymers of ethylene and the above-exemplified α-olefin, terpolymers of ethylene, α-olefin, and non-conjugated diene. Examples of the non-conjugated diene include 1,4-hexadiene, dicyclopentadiene, and 5-ethylidene-2-norbornene. The rubber base material for modification may also include rubbers obtained from an aromatic vinyl monomer and a diene.

The base material of the olefin-based rubber or modified rubber [component (d)] includes, for example, ethylene propylene rubber (EPR), ethylene-1-butene rubber (EBR), EPDM (a terpolymer composed of an ethylene-propylene rubber and a third component such as dicyclopentadiene and ethylidenenorbornene), hydrogenated products of styrene-butadiene block copolymer or triblock copolymer, acrylic rubber, polyisobutylene, epichlorohydrin rubber, polyamide elastomer, and polyester rubber.

The modified rubber [component (d)] preferably has a modification ratio of 0.01-5 wt%.

The modified rubber and unmodified rubber may be used in combination with each other.

According to the present invention, the polyethylene composition may be incorporated with an inorganic filler [component (e)]. The filler includes, for example, silicates (such as talc, clay, bentonite and attapulgite), carbonates (such as calcium carbonate and magnesium carbonate), sulfates (such as barium sulfate), mica, glass fiber, and carbon fiber, which are in general use in the field relating to the present invention. A preferred filler is po tassium titanate whisker having a fiber diameter of 0.1-1.0 μm and a fiber length of 5-50 μm. The polyethylene composition incorporated with this whisker yields molded articles having an increased mechanical strength, a decreased linear expansion coefficient, and a small dimensional change with temperature.

The filler [component (e)] is preferably used in combination with a titanate coupling agent or phosphate-titanate coupling agent [component (f)], which improves the mechanical strength of the polyethylene composition.

Examples of the phosphate-titanate coupling agent include those represented by the following formulas.

(i)

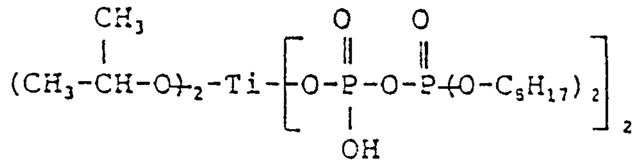

(ii)

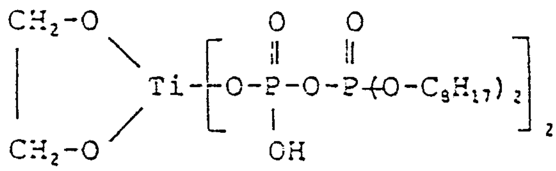

(iii)

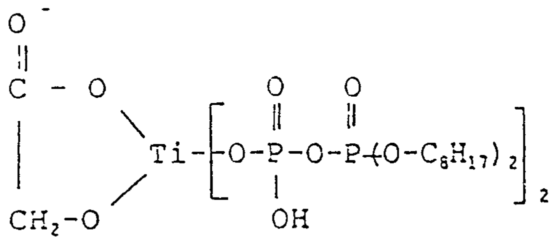

(iv)

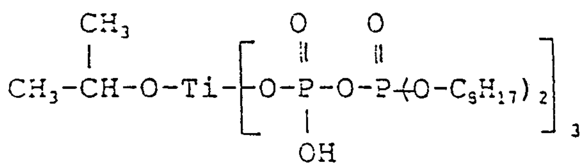

The polyethylene composition of the present is composed of:

(a) 5-90 parts by weight of modified polyethylene,

(b) 5-90 parts by weight of polyamide, and

(c) 1-30 parts by weight of modified polypropylene.

With component (a) less than 5 parts by weight, the polyethylene composition is poor in stiffness and low-temperature impact strength. With component (a) in excess of 90 parts by weight, the polyethylene composition is poor in stiffness, coating film adhesion, and melt flowability. (Poor melt flowability causes flow marks at the time of molding.)

In the case where the modified polyethylene [component (a)] is a mixture of unmodified polyethylene and modified polyethylene, the amount of unmodified polyethylene is preferably 0-95 wt% and the amount of modified polyethylene is preferably 5-100 wt%, with the acid content being in the range specified above.

With component (b) less than 5 parts by weight, the polyethylene composition has unbalanced mechanical strength, heat resistance, and impact strength. With component (b) in excess of 90 parts by weight, the polyethylene composition does not exhibit the superior water resistance characteristic of polyolefin.

With component (c) less than 1 part by weight, the polyethylene composition is poor in stiffness and coating film adhesion. With component (c) in excess of 30 parts by weight, the polethylene composition is not improved in low-temperature impact strength.

In the case where the polyethylene composition of the present invention is incorporated with a rubber or modified rubber [component (d)], its amount should be 1-50 parts by weight for 100 parts by weight of the total amount of components (a), (b), and (c).

With component (d) less than 1 part by weight, the polyethylene composition is not improved in impact resistance. With component (d) in excess of 50 parts by weight, the polyethylene composition is poor in mechanical strength and surface appearance.

In the case where the polyethylene composition of the present invention is incorporated with a filler [component (e)], its amount is preferably 0.5-50 parts weight and more preferably 0.5-15 parts by weight for 100 parts by weight of the total amount of components (a), (b), and (c) , With the filler in an excessively small amount, the polyethylene composition is not improved in heat resistance and stiffness. With the filler in an excessively large amount, the polyethylene composition lacks good processability and yields molded articles

having a dull surface.

According to the present invention, even a small amount of filler produces its effect of improving stiffness, mechanical strength, heat resistance, and surface gloss when it is used in combination with a small amount of the titanate coupling agent.

In the case where the titanate coupling agent is added, its amount is preferably 0.5-20 wt% of the amount of the filler.

The polyethylene composition of the present invention can be obtained by dry-blending (a) modified polyethylene, (b) polyamide, and (c) modified polypropylene (PP), and optional (d) rubber or modified rubber, (e) filler, and (f) titanate coupling agent using a mixer or blender, and melt-mixing the dry blend using a Banbury mixer or the like.

The polyethylene composition of the present invention may be incorporated with a variety of additives such as slip agent, antistatic agent, and flame retardant.

*Examples*

The invention will be explained in more detail with reference to the following examples. The polyethylene compositions obtained in the examples were tested for properties according to the following test methods.

Coating film adhesion: Cross-cut cellophane tape peel test. Expressed in terms of the number of squares out of 100 which remained unremoved.

Tensile strength: JIS K-7113

Flexural modulus: JIS K-7203 (23°C)

Izod impact strength: JIS K-7110, with notch, (23°C)

Heat distortion temperature: JIS K-7207, with a load of 4.6 kg/$cm^2$

Example 1

The following components were dry-blended using a tumbler blender.

(1) 20 parts by weight of HDPE (having a density of 0.94 g/$cm^3$) containing 10 parts by weight of maleic anhydride-modified PE (with a modification ratio of 0.5 wt%, prepared by melt-mixing 100 parts by weight of HDPE, 1.0 part by weight of maleic anhydride, and 0.05 parts by weight of 2,5-dimethyl-2,5-di (t-butyl peroxy) hexene-3,

(2) 70 parts by weight of nylon-6.

(3) 10 parts by weight of maleic anhydride-modified polypropylene (with a modification ratio of 0.5 wt%) prepared in the same manner as the modified polyethylene.

(4) 10 parts by weight of EPR (for 100 parts by weight of the total amount of components (1), (2), and (3)).

The resulting dry blend was pelletized by using a 45-mm extruder at 250°C. After drying, the pellets were made into specimens by injection molding at 250°C, and the specimens were tested for physical properties. The results are shown in Table 1.

Example 2

The same procedure as in Example 1 was repeated, except that the composition was incorporated with 10 parts by weight of talc. The results are shown in Table 1.

Example 3

The same procedure as in Example 2 was repeated, except that the composition was not incorporated with the EPR, the amount of the HDPE was changed to 40 parts by weight (with the modified PE being 20 parts by weight), the amount of the modified PP was changed to 20 parts by weight and the amount of the nylon-6 was changed to 40 parts by weight. The results are shown in Table 1.

Example 4

The same procedure as in Example 3 was repeated, except that the amount of the talc was changed to 30 parts by weight and the amount of the EPR was changed to 10 parts by weight. The results are shown in Table 1.

Example 5

The same procedure as in Example 4 was repeated, except that the amount of the EPR was changed to 30 parts by weight. The results are shown in Table 1.

Comparative Example 1

The same procedure as in Example 1 was repeated, except that the polyethylene composition was not incorporated with the modified PP and the amount of the HDPE was changed to 30 parts by weight (with the modified PE being 10 parts by weight). The results are shown in Table 1.

Comparative Example 2

The same procedure as in Comparative Example 1 was repeated, except that the amount of the modified PE was changed to 15 parts by weight and the EPR was replaced by 10 parts by weight of maleic

anhydride-modified EPR (with a modification ratio 0.3 wt%, prepared by melt-mixing 100 parts by weight of EPR, 0.3 parts by weight of maleic anhydride, and 0.05 parts by weight of 2,5-dimethyl-2,5-di (t-butyl peroxy) hexine-3, referred to as CMEPR hereinafter). The results are shown in Table 1.

Comparative Example 3

The same procedure as in Comparative Example 2 was repeated, except that the polyethylene composition was incorporated with 10 parts by weight of the talc. The results are shown in Table 1.

Comparative Example 4

The same procedure as in Example 1 was repeated, except that the composition was not incorporated with the EPR and the modified PP, the amount of the HDPE was changed to 60 parts by weight (with the modified PE being 20 parts by weight), the amount of the nylon-6 was changed to 40 parts by weight, and the amount of the filler (talc) was changed to 10 parts by weight. The results are shown in Table 1.

Comparative Example 5

The same procedure as in Comparative Example 4 was repeated, except that the amount of the EPR was changed to 10 parts by weight and the amount of the talc was changed to 30 parts by weight. The results are shown in Table 1.

Comparative Example 6

The same procedure as in Comparative Example 5 was repeated, except that the EPR was replaced by the modified EPR (CMEPR) used in Comparative Example 2. The results are shown in Table 1.

Table 1

| | Example No. | | | | | Comparative Example No. | | | | | |
|---|---|---|---|---|---|---|---|---|---|---|---|
| Components and properties | 1 | 2 | 3 | 4 | 5 | 1 | 2 | 3 | 4 | 5 | 6 |
| HDPE (a) | 20 | 20 | 40 | 40 | 40 | 30 | 30 | 30 | 60 | 60 | 60 |
| (modified PE) | (10) | (10) | (20) | (20) | (20) | (10) | (15) | (15) | (20) | (20) | (20) |
| Nylon-6 (b) | 70 | 70 | 40 | 40 | 40 | 70 | 70 | 70 | 40 | 40 | 40 |
| Modified PP (c) | 10 | 10 | 20 | 20 | 20 | – | – | – | – | – | – |
| Rubber (d) | EPR 10 | EPR 10 | – | EPR 10 | EPR 30 | EPR 10 | CMEPR 10 | CMEPR 10 | – | EPR 10 | CMEPR 10 |
| Filler (e) | – | talc 10 | talc 10 | talc 30 | talc 30 | – | – | talc 10 | talc 10 | talc 30 | talc 30 |
| Tensile strength | 490 | 510 | 360 | 310 | 270 | 470 | 450 | 490 | 350 | 340 | 340 |
| Flexural modulus, 23°C | 17300 | 19500 | 18500 | 19100 | 14000 | 16300 | 15200 | 17800 | 17000 | 16900 | 17000 |
| Izod impact strength, 23°C<br>Izod impact strength, −40°C | 48<br>36 | 40<br>35 | 9<br>6 | 32<br>14 | 62<br>28 | 46<br>35 | 48<br>38 | 43<br>33 | 8<br>6 | 25<br>13 | 29<br>15 |
| Coating film adhesion | 100/100 | 100/100 | 100/100 | 100/100 | 100/100 | 20/100 | 73/100 | 33/100 | 0/100 | 0/100 | 75/100 |

As exemplified, the present invention provides a polyethylene composition which yields molded articles having improved coating film adhesion, low-temperature impact resistance, and good surface appearance free of flow marks owing to improved moldability.

## Claims

1. A polyethylene composition which comprises:
(a) 5-90 parts by weight of modified polyethylene having a melt index of 1-30 g/10 min at 190° C, partly or entirely modified with an unsaturated carboxylic acid or a derivative thereof;
(b) 5-90 parts by weight of polyamide; and
(c) 1-30 parts by weight of modified polypropylene partly or entirely modified with an unsaturated carboxylic acid or a derivative thereof.

2. A polyethylene composition as claimed in Claim 1, which further comprises (d) 1-50 parts by weight of rubber or modified rubber modified with an unsaturated carboxylic acid or a derivative thereof for 100 parts by weight of the total amount of the components (a), (b), and (c).

3 A polyethylene composition as claimed in claim 2 wherein the rubber, when used in modified form, is modified with from 0.1 - 5 wt% of the acid or derivative.

4 A polyethylene composition as claimed in claim 2 or 3 wherein the rubber or modified rubber comprises EPR, EBR or EPDM.

5 A polyethylene composition as claimed in any preceding claim wherein the polyethylene is modified with from 0.01 - 5 wt % of the acid or derivative and/or the polypropylene is modified with from 0.01 - 2 wt % of the acid or derivative.

6 A polyethylene composition as claimed in any preceding, claim wherein the modifier for the polyethylene and/or polypropylene and/or (when present) rubber comprises maleic acid, crotonic acid, end-cis-bicyclo (2.2.1) hept-5-ene-2,3-dicarboxylic acid, fumaric acid, acrylic acid or isocrotonic acid or derivatives thereof, especially maleic anhydride.

7 A polyethylene composition as claimed in any preceding claim which additionally includes an inorganic filler component (e) such as one or more of silicates, carbonates, sulfates, mica, glass fibre, carbon fibre and potassium titanate whisker, preferably in an amount of from 0.5 - 50 parts by weight based on 100 parts by weight of (a), (b) and (c).

8 A polyethylene composition as claimed in claim 7 which includes as component (e) potassium titanate whisker, having a fibre diameter of from 0.1 - 1.0 X $10^{-6}$m and a fibre length of from 5 - 50 x $10^{-6}$m.

9 A polyethylene composition as claimed in claim 7 or 8 which additionally includes a titanate, preferably a phosphate-titanate, coupling agent component (f), preferably in an amount of from 0.5 - 20 wt % of the amount of filler (e).

10 A polyethylene composition as claimed in claim 9 wherein the coupling agent (f) comprises one or more of the phosphate titanates having the following formulae :

(i)

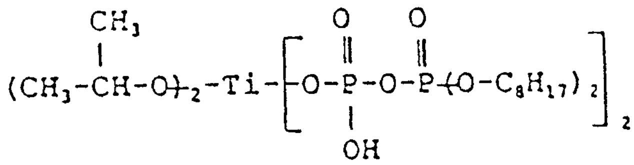

(ii)

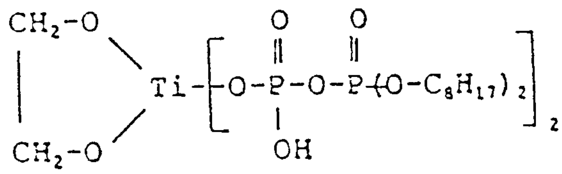

(iii)

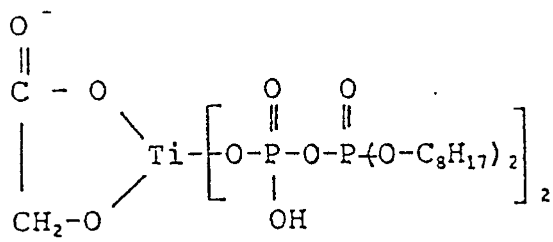

(iv)

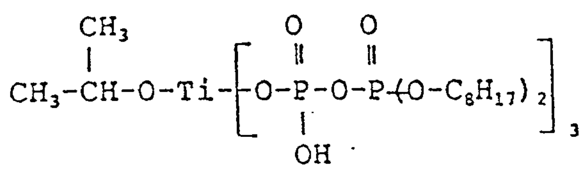

11 The use of a polyethylene composition as claimed in any preceding claim as a molding compound, especially where the molding is intended for film coating.